# EUROPEAN PATENT SPECIFICATION

(11) **EP 2 572 084 B1**
(45) Date of publication and mention of the grant of the patent: **16.07.2014**
(21) Application number: 11729710.1
(22) Date of filing: 19.05.2011
(51) Int. Cl.: F01N 13/14, F01N 13/18, F16L 27/11, F16L 51/02

(54) **FLEXIBLE SLEEVE FOR EXHAUST PIPE OF A VEHICLE MOTOR SYSTEM**
FLEXIBLE MUFFE FÜR EIN ABGASROHR EINES FAHRZEUGMOTORSYSTEMS
GAINE FLEXIBLE POUR TUYAU D'ÉCHAPPEMENT D'UN SYSTÈME DE MOTEUR DE VÉHICULE

(30) Priority: 20.05.2010 IT MI20100911
(43) Date of publication of application: 27.03.2013
(73) Proprietor: Iveco S.p.A., 10156 Torino (IT)
(72) Inventor: BONA, Paolo, I-25127 Brescia (IT)
(74) Representative: De Bortoli, Tiziano
(86) International application number: PCT/IB2011/052196
(87) International publication number: WO 2011/145070

(56) References cited:
- EP-A1- 1 054 140
- DE-U1- 20 207 262
- DE-U1- 20 317 596
- DE-U1-202007 009 054
- DE-U1-202009 008 309
- GB-A- 893 510

## Description

### Application field of the invention

The present invention refers to a flexible sleeve for exhaust pipe of a vehicle motor system.

### Description of the prior art

The exhaust pipe of a heat engine is subject to severe operating conditions and to fatigue.

Due to high temperatures, it undergoes a remarkable thermal expansion. In the exhaust pipe the noise is very high, due to the engine and to the turbine, if present, and it is even intensified by the whistle of the latter. It is also subject to strong vibrations, above all from the engine side, while on the other side it is generally fixed to the structure of the vehicle in a semirigid way, by elastic connections.

It is thus necessary to provide the exhaust pipe with a flexible sleeve, to be inserted along its route, in order to overcome said drawbacks at least partially.

Structures of flexible sleeves suitable for said purposes are known in the art. For example it is known to provide the sleeve with a double layer, in order to reduce noise. The external layer is bellows-shaped, while the internal layer is formed by a rigid or flexible pipe which generates drawbacks due to the not-optimal seal due to the thermal expansion, and to the possibility of breaking because of the rubbing with the external layer and to the possibility of blow-bys.

Flexible sleeves such as the one described by DE 20 2007 009 054 U1 are also known. This document discloses a flexible sleeve for an exhaust pipe of a vehicle motor system, the sleeve being of the double layer type. The sleeve comprises an outer bellows-shaped metal layer and and inner stepped metal layer. The two ends of the outer layer end with respective flared flange collars. Likewise, the two ends of the inner layer end with respective flared flange collars which are joined to the respective flared flange collars of the outer layer.

Additionally, the content of document DE 203 17 596 U1 is known. This document discloses a flexible sleeve for an exhaust pipe of a vehicle having a flame tube on its radial inner side.

### Summary of the invention

Therefore the aim of the present invention is to provide a flexible sleeve for exhaust pipe of a vehicle motor system, suitable for overcoming all the drawbacks mentioned above.

A particular object of this invention is a flexible sleeve for an exhaust pipe of a vehicle motor system, a method for assembling the flexible sleeve, and an exhaust pipe provided with said flexible sleeve, as described more fully in the claims which are an integral part of this description.

### Brief description of the Figures

Further purposes and advantages of the present invention will become clear from the following detailed description of a preferred embodiment (and its alternative embodiments) and the drawings that are attached hereto, which are merely illustrative and non-limitative, in which:
figure 1 shows a block diagram of a motor system with a exhaust gas system comprising the flexible sleeve that is object of the present invention;
figure 2 shows an example of exhaust pipe where the flexible sleeve is inserted;
figure 3 shows the flexible sleeve that is object of the invention in a partial assembled section, with two enlarged views of the end parts;
figure 4 shows an exploded view of the flexible sleeve and its constituent parts;
figure 5 shows the inner configuration of the flexible sleeve in the upper part, and the outer configuration of the flexible sleeve in the lower part;
figure 6 shows the configuration of the inner part of the flexible sleeve, with an exploded view of its longitudinal section.

In the figures the same reference numbers and letters identify the same elements or components.

### Detailed description of embodiments of the invention

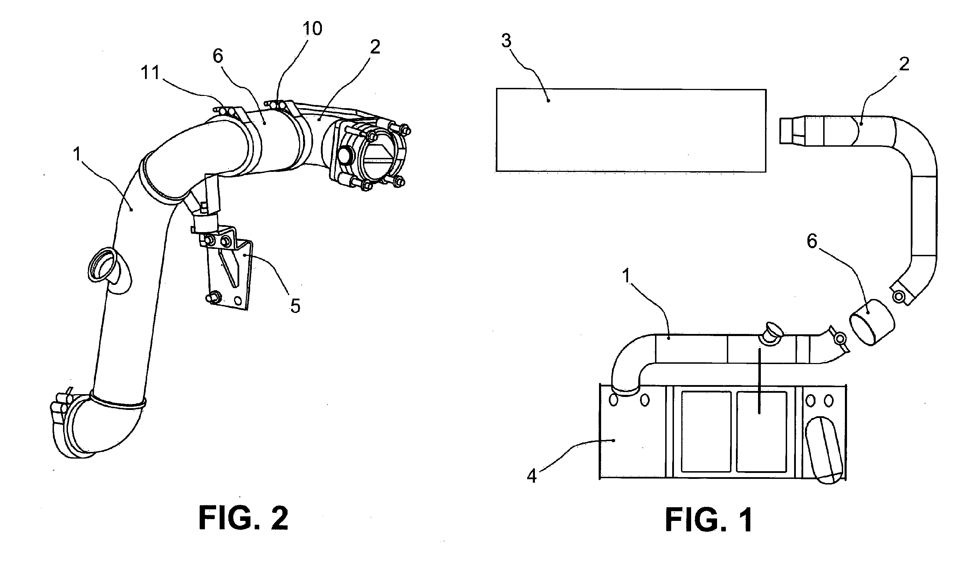

With reference to figures 1 and 2, the exhaust pipe is divided into two parts 1 and 2, and connects the engine, indicated by reference 3, with a part of the exhaust gas system, indicated by reference 4, which, as known, may comprise a silencer and/or a catalyser.

In general, the part 1 of the exhaust pipe is fixed to the vehicle's structure by means, for example, of a connection of a known type with an anti-vibrations rubber pad, generically indicated by reference 5.

The flexible sleeve 6 object of the invention is inserted between the two parts of the exhaust pipe 1 and 2.

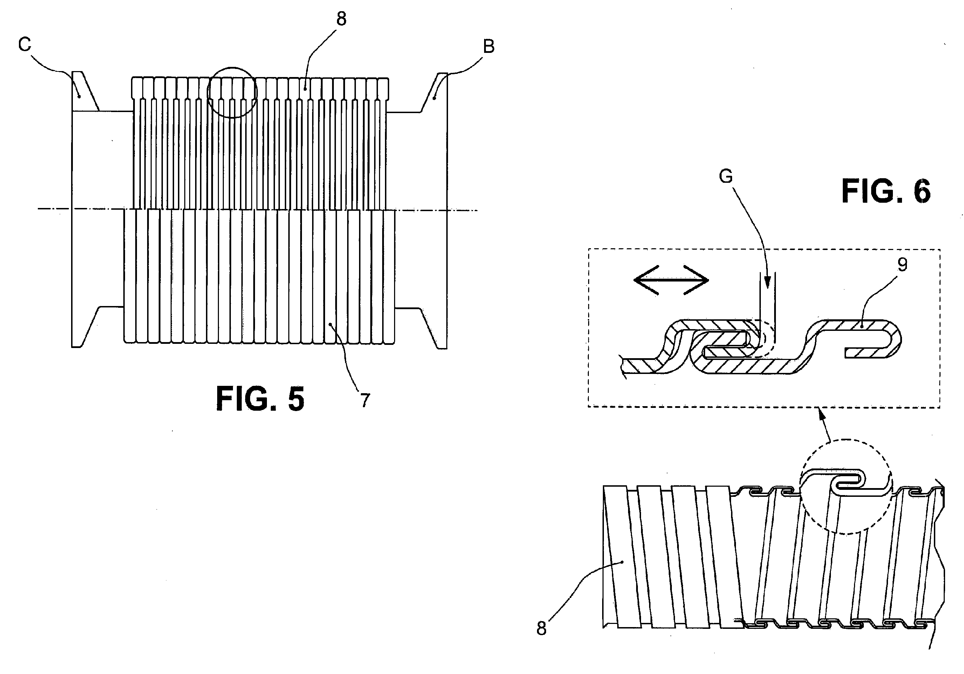

With reference to figures from 3 to 6, the flexible sleeve is of the double layer type, and substantially comprises an outer metal, bellows-shaped layer (or tube) 7, and an inner metal, crimped spiral-shaped layer (or tube) 8 (fig. 6).

More in particular, the enlarged view of fig. 6 shows that the spiral of the inner layer has a double continuous fold section 9, so that each coil fits into the adjacent coils, preserving a clearance G so that the coils may mutually slide in the length direction of the sleeve (double arrow in the figure). Thus the inner layer may vary its length and may bend.

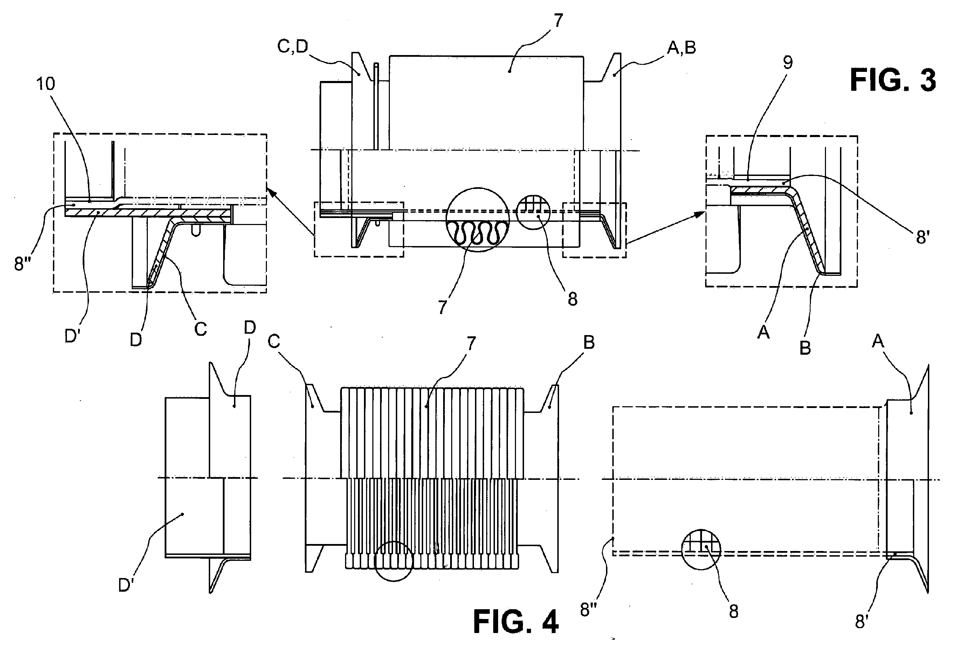

The two ends of the outer layer 7 end with flared flange collars indicated by B and C with smooth walls (figs. 4 and 5). Flanges B and C are flared outwards from the layer.

One of the ends 8' of the inner layer 8 ends with a flared flange collar with smooth wall indicated by A, which is preferably made by a separated piece and is welded to the end 8' of the layer which partially penetrates in it, without going out from the opposite side (fig. 4). The inner layer is longer than said outer layer.

Preferably a fastening ring 9 is welded to the inner wall of the flange collar A at the end 8' of the inner layer, in order to improve the strength of the connection.

The flexible sleeve comprises a further flared flange collar with smooth wall indicated by D, within which there is a cylindrical sector D' longer than the flange D, thus forming its extension.

During the assembling, the inner layer 8 is inserted in the external layer 7, until the flange A is joined in contact with the flange B of an end of the outer layer. From the opposite side of the external layer, the further flared flange collar D is brought nearer to the flared flange collar C of the outer layer, so that the end 8" of the inner layer penetrates in the cylindrical sector D', thus making it mate with the end of the latter. If necessary, the outer layer can be slightly pressed, in order to allow the two collars C and D to be joined, then it is possible to weld the end 8 " of the inner layer with the cylindrical sector D', thus forming the flexible sleeve, showed in fig. 3 in an assembled view.

Preferably a fastening ring 10 is welded to the inner wall of the flange collar D' at the end 8" of the inner layer, in order to improve the strength of the connection.

Fig. 3 also shows that once the sleeve is assembled, the inner layer protrudes from only one of the two parts of the outer layer. Advantageously, the sleeve may be mounted in the exhaust pipe so that the part where the inner layer does not protrude from the outer layer is upstream of the exhaust gas flow, so that it does not hinder its outflow, since its face is without recesses that would generate refluxes and whirls.

The flexible sleeve thus obtained is inserted into an interruption of the exhaust pipe and is secured, for example with elastic straps (or collars) 10, 11 (fig. 2) at the two sides.

Welding the flange collar A with B and C with D is not necessary, since they can be secured by the straps (or collars) at the ends of the main pipe, which have corresponding collars that fit with the flange collars of the sleeve. The straps (or collars), on sale, must be V-shaped, in order to enclose the edges of the sleeve and secure it correctly.

It will be apparent to the person skilled in the art that other alternative and equivalent embodiments of the invention can be conceived and reduced to practice without departing from the scope of the invention.

The advantages deriving from the use of this invention are evident.

The flexible sleeve according to the invention has the advantage to make the length of the inner layer independent of the length of the outer layer, which thus may be different, in particular the inner layer is longer than the outer layer.

Thus all the wanted characteristics are obtained, among which:
- compensation of the thermal expansion of the exhaust gas system;
- reduction of the noise;
- improvement of the fatigue strength;
- improvement of the back pressure of the exhaust gas system;
- absorbing of the relative movements between engine and chassis.

From the description set forth above it will be possible for the person skilled in the art to embody the invention with no need of describing further construction details.

## Claims

1. A flexible sleeve (6) for an exhaust pipe of a vehicle motor system, the sleeve (6) being of the double layer type, comprising an outer metal, bellows-shaped layer (7) and an inner metal, crimped spiral-shaped layer (8), wherein:
- said inner layer (8) is longer than said outer layer (7);
- the two ends of the outer layer (7) end with respective flared flange collars (B, C);
- a first end (8') of the inner layer (8) ends with a third flared flange collar (A) ;
- the flexible sleeve (6) comprises a fourth flared flange collar (D) within which there is a cylindrical sector (D') longer than the flared flange (D), thus forming an extension thereof outwards the sleeve (6);
- said fourth flared flange collar (D) is joined in contact with a first (C) of the two flared flange collars of the outer layer (7), and a second (B) of the two flared flange collars of the outer layer (7) is joined in contact with said third flared flanged collar (A);
- a second end (8") of the inner layer (8) is joined to the inside of the cylindrical sector (D').

2. A flexible sleeve according to claim 1, wherein said metal crimped spiral (8) has a double continuous fold section (9), so that each coil fits into the adjacent coils, preserving a clearance (G) so that the coils may mutually slide in the length direction of the sleeve.

3. A flexible sleeve according to claim 1 or 2, comprising fastening rings (9, 10) on the inner walls of the third flared flange collar (A) and of the cylindrical sector (D') of the fourth flared flange collar (D), at the ends (8', 8") of the inner layer (8).

4. A method of assembling the flexible sleeve according to claim 1 or 2 or 3, wherein:
- the inner layer (8) penetrates the outer layer (7), until the flange (A) of the third collar is joined in contact with said second (B) of the two flared flange collars of the outer layer (7);
- said fourth flared flange collar (D) is joined in contact with the first (C) of the two flared flanged collars of the outer layer (7), so that said second end (8") of the inner layer (8) penetrates the cylindrical sector (D'), thus making it mate with the end of the latter;
- said second end (8") of the inner layer (8) is welded to the end of the cylindrical sector (D').

5. A method according to claim 4, comprising a step in which fastening rings (9, 10) are welded onto the inner walls of the third flared flange collar (A) and of the cylindrical sector (D') of the flared flange collar (D), at the ends (8', 8 ") of the inner layer (8).

6. An exhaust pipe of a vehicle motor system, comprising a flexible sleeve according to claim 1 or 2 or 3.

7. An exhaust pipe according to claim 6, wherein said flexible sleeve is inserted into an interruption of the pipe itself, and secured with elastic straps (10, 11) to the two sides so that the flange of the third collar (A) is facing the engine side.

## Patentansprüche

1. Flexible Muffe (6) für ein Abgasrohr eines Fahrzeugmotorsystems, wobei die Muffe (6) vom Doppellagentyp ist, mit einer faltenbalgförmigen Außenmetalllage (7) und einer gekrimpten spiralförmigen Innenmetalllage (8), wobei:
- die Innenlage (8) länger als die Außenlage (7) ist;
- die zwei Enden der Außenlage (7) mit jeweiligen aufgeweiteten Flanschkrägen (B, C) enden;
- ein erstes Ende (8') der Innenlage (8) mit einem dritten aufgeweiteten Flanschkragen (A) endet;
- die flexible Muffe (6) einen vierten aufgeweiteten Flanschkragen (D) aufweist, in welchem sich ein zylindrischer Sektor (D') befindet, der länger als der aufgeweitete Flansch (D) ist, wodurch eine Verlängerung desselben auswärts der Muffe (6) gebildet wird;
- der vierte aufgeweitete Flanschkragen (D) in Kontakt mit einem ersten (C) der zwei aufgeweiteten Flanschkrägen der Außenlage (7) gekoppelt ist und ein zweiter (B) der zwei aufgeweiteten Flanschkrägen der Außenlage (7) in Kontakt mit dem dritten aufgeweiteten Flanschkragen (A) gekoppelt ist;
- ein zweites Ende (8") der Innenlage (8) mit der Innenseite des zylindrischen Sektors (D') gekoppelt ist.

2. Flexible Muffe nach Anspruch 1, wobei die gekrimpte Metallspirale (8) einen doppelten kontinuierlichen Faltungsabschnitt (9) aufweist, so dass jede Wicklung in die benachbarten Wicklungen passt, wobei ein Zwischenraum (G) bewahrt wird, so dass die Wicklungen gegenseitig in der Längsrichtung der Muffe gleiten können.

3. Flexible Muffe nach einem der Ansprüche 1 oder 2, mit Befestigungsringen (9, 10) an den Innenwänden des dritten aufgeweiteten Flanschkragens (A) und des zylindrischen Sektors (D') des vierten aufgeweiteten Flanschkragens (D) an den Enden (8', 8") der Innenlage (8).

4. Verfahren zum Zusammenbauen der flexiblen Muffe nach einem der Ansprüche 1 oder 2 oder 3, wobei:
- die Innenlage (8) in die Außenlage (7) eindringt, bis der Flansch (A) des dritten Kragens in Kontakt mit dem zweiten (B) der zwei aufgeweiteten Flanschkrägen der Außenlage (7) gekoppelt wird;
- der vierte aufgeweitete Flanschkragen (D) in Kontakt mit dem ersten (C) der zwei aufgeweiteten Flanschkrägen der Außenlage (7) gekoppelt wird, so dass das zweite Ende (8") der Innenlage (8) in den zylindrischen Sektor (D') eindringt, wodurch er mit dem Ende des letzteren zusammenpasst;
- das zweite Ende (8") der Innenlage (8) an das Ende des zylindrischen Sektors (D') geschweißt wird.

5. Verfahren nach Anspruch 4, mit einem Schritt, bei dem Befestigungsringe (9, 10) an die Innenwände des dritten aufgeweiteten Flanschkragens (8) und des zylindrischen Sektors (D') des aufgeweiteten Flanschkragens (D) an den Enden (8', 8") der Innenlage (8) geschweißt werden.

6. Auspuffrohr eines Fahrzeugmotorsystems mit einer flexiblen Muffe nach einem der Ansprüche 1 oder 2 oder 3.

7. Auspuffrohr nach Anspruch 6, wobei die flexible Muffe in eine Unterbrechung des Rohres selbst eingesetzt und mit elastischen Riemen (10, 11) an den zwei Seiten gesichert ist, so dass der Flansch des dritten Kragens (A) zu der Motorseite weist.

## Revendications

1. Gaine flexible (6) pour un tuyau d'échappement d'un système de moteur de véhicule, la gaine (6) étant du type à double couche, comprenant une couche extérieure de métal en forme de soufflet (7) et une couche intérieure de métal en forme de spirale plissée (8), dans laquelle :
- ladite couche intérieure (8) est plus longue que ladite couche extérieure (7) ;
- les deux extrémités de la couche extérieure (7) se terminent par des colliers de bride évasée respectifs (B, C) ;
- une première extrémité (8') de la couche intérieure (8) se termine par un troisième collier de bride évasée (A) ;
- la gaine flexible (6) comprend un quatrième collier de bride évasée (D) à l'intérieur duquel se trouve un secteur cylindrique (D') plus long que la bride évasée (D), en formant ainsi une extension de celle-ci à l'extérieur de la gaine (6) ;
- ledit quatrième collier de bride évasée (D) est mis en contact avec un premier (C) des deux colliers de bride évasée de la couche extérieure (7), et un deuxième (B) des deux colliers de bride évasée de la couche extérieure (7) est mis en contact avec ledit troisième collier de bride évasée (A) ;
- une deuxième extrémité (8") de la couche intérieure (8) est jointe à l'intérieur du secteur cylindrique (D').

2. Gaine flexible selon la revendication 1, dans laquelle ladite spirale plissée de métal (8) comporte une section à double pli continu (9), de sorte que chaque enroulement entre dans les enroulements adjacents, en maintenant un espacement (G) de sorte que les enroulements puissent coulisser l'un par rapport à l'autre dans le sens de la longueur de la gaine.

3. Gaine flexible selon la revendication 1 ou 2, comprenant des bagues de serrage (9, 10) sur les parois intérieures du troisième collier de bride évasée (A) et du secteur cylindrique (D') du quatrième collier de bride évasée (D), aux extrémités (8', 8") de la couche intérieure (8).

4. Procédé d'assemblage de la gaine flexible selon la revendication 1, 2 ou 3, dans lequel :
- la couche intérieure (8) pénètre dans la couche extérieure (7) jusqu'à ce que la bride (A) du troisième collier soit mise en contact avec ledit deuxième (B) des deux colliers de bride évasée de la couche extérieure (7) ;
- ledit quatrième collier de bride évasée (D) est mis en contact avec le premier (C) des deux colliers de bride évasée de la couche extérieure (7), de sorte que ladite deuxième extrémité (8") de la couche intérieure (8) pénètre dans le secteur cylindrique (D'), ce qui l'amène à s'accoupler avec l'extrémité de ce dernier ;
- ladite deuxième extrémité (8") de la couche intérieure (8) est soudée à l'extrémité du secteur cylindrique (D').

5. Procédé selon la revendication 4, comprenant une étape au cours de laquelle des bagues de serrage (9, 10) sont soudées sur les parois intérieures du troisième collier de bride évasée (A) et du secteur cylindrique (D') du collier de bride évasée (D), aux extrémités (8', 8") de la couche intérieure (8).

6. Tuyau d'échappement d'un système de moteur de véhicule, comprenant une gaine flexible selon la revendication 1, 2 ou 3.

7. Tuyau d'échappement selon la revendication 6, dans lequel ladite gaine flexible est insérée dans une interruption du tuyau proprement dit, et est fixée avec des sangles élastiques (10, 11) sur les deux côtés de sorte que la bride du troisième collier (A) soit face au côté de moteur.
